# EUROPÄISCHE PATENTANMELDUNG

(11) **EP 4 585 762 A1**
(43) Veröffentlichungstag der Anmeldung: **16.07.2025**
(21) Anmeldenummer: 24151438.9
(22) Anmeldetag: 11.01.2024
(51) Int. Cl.: E04B 1/41, E04B 1/76, E04G 21/32, F24S 25/61, F24S 25/70, H02S 20/24

(54) **ANSCHLUSSVORRICHTUNG ZUR BEFESTIGUNG VON ZUSATZELEMENTEN AN BAUWERKEN**

(71) Anmelder: Arthur Weber AG, 6423 Seewen SZ (CH)
(72) Erfinder: NAUER, Josef, 6430 Schwyz (CH)
(74) Vertreter: Rutz, Andrea

(57) **Zusammenfassung**

Es wird eine Anschlussvorrichtung zur Befestigung von Zusatzelementen (90) an Bauwerken des Hoch- oder Tiefbaus angegeben. Die Anschlussvorrichtung weist eine Unterkonstruktion (30) zum Verankern der Anschlussvorrichtung an oder in einem Bauwerk auf sowie ein Schraubteil (50) zum Befestigen eines Zusatzelements (90). Die Anschlussvorrichtung ist mittels Ineinanderschrauben einer ersten Gewindehülse (32) der Unterkonstruktion (30) und einer zweiten Gewindehülse (52) des Schraubteils (50) bedarfsgerecht bzgl. ihrer Höhe anpassbar. Die Unterkonstruktion (30) weist zudem eine durch die erste Gewindehülse (32) hindurchragende Sicherungsstange (34) auf, welche zur Sicherung des Gewindeeingriffs zwischen der ersten Gewindehülse (32) und der zweiten Gewindehülse (52) mittels Anbringen eines Sicherungselements (62) dient.

## Beschreibung

### TECHNISCHES GEBIET

Die vorliegende Erfindung betrifft eine Anschlussvorrichtung zur Befestigung von Zusatzelementen an Bauwerken des Hoch- oder Tiefbaus. Bei derartigen Zusatzelementen kann es sich beispielsweise um Geländer, wie insbesondere Ganzglasgeländer, oder um Solaranlagen, Antennen oder HLK-Anlagen handeln.

### STAND DER TECHNIK

Zusatzelemente, wie Ganzglasgeländer, Solaranlagen oder Antennen, müssen nicht nur sicher am jeweiligen Bauwerk befestigt werden, sondern auch derart, dass an der Aussenseite des Bauwerks angebrachte Schichten bzgl. ihrer Funktion nicht oder nur soweit wie nötig beeinträchtigt werden. Derartige Schichten betreffen insbesondere zur Wärmedämmung dienende Isolationsschichten und Folien, welche beispielsweise als Dampfsperre oder zur Dachabdichtung dienen. Aufgrund der unterschiedlichen Schichtdicken insbesondere von Isolationsschichten besteht ein Bedarf an situationsgerecht anpassbaren Anschlussvorrichtungen zur Befestigung der Zusatzelemente.

Die WO 2019/125907 A1 offenbart eine Verankerungsvorrichtung mit einer Grundplatte, die mittels Schrauben in der Dachkonstruktion verschraubt wird, und an der eine Gewindehülse angebracht ist, um das Festschrauben einer Zusatzstruktur am Dach zu ermöglichen. Mittels Überkleben mit einer Abdeckmembran wird eine Abdichtung der Grundplatte zur Dachmembran erreicht.

Die WO 2014/028957 A2 bezieht sich auf eine Vorrichtung für die Befestigung von Zusatzelementen an der Aussenfläche eines Gebäudes. Zur Sicherstellung und Überwachung der Dichtwirkung zwischen der Vorrichtung und der Gebäudeaussenfläche wird ein Abdeckungsteil über einem Trageteil der Vorrichtung angeordnet. Zur Prüfung der Dichtwirkung wird der Druckunterschied gemessen, der in einem von diesen beiden Bauteilen und der Gebäudeaussenfläche gemeinsam begrenzten Raum relativ zur Umgebung erzeugbar ist.

In der DE 10 2010 036 305 A1 ist eine Befestigungsvorrichtung zum Befestigen eines Solarmoduls auf einem mit einer Dämmschicht versehenen Flachdach gezeigt. Ein Anschlusselement wird hierzu mittels Schrauben durch die Dämmschicht hindurch in ein Dachelement eingeschraubt. Ein Distanzstück muss dabei auf die Dicke der Dämmschicht abgelängt werden.

Die DE 10 2008 012 717 A1 offenbart ein Aufnahmeelement zum Befestigen von Zusatzelementen an Dächern. Die Vorrichtung ist an unterschiedliche Dicken der Dachdämmung anpassbar, indem eine obere Gewindehülse auf eine untere Gewindespindel aufschraubbar ist. Die Vorrichtung liegt von oben und von unten an der Dachaussenhaut an und ist dadurch gegenüber dieser abgedichtet.

Die DE 200 08 053 U1 offenbart eine längeneinstellbare Konsole zur Halterung von Gerüsten oder Absturzsicherungen an Hauswänden. An einer Sockelplatte, die im Beton verankert wird, ist ein Gewindezapfen angebracht, auf welchen sich eine Hülse durch die Isolationsschicht hindurch aufschrauben lässt. Ein fest mit der Hülse verbundener Kragen ist zum Aufliegen auf der Fassadenaussenhaut ausgebildet. Durch die Hülse hindurch ist eine Schraube in ein Innengewinde des Gewindezapfens eingeschraubt, so dass Hülse und Schraube sich gegenseitig kontern.

Die Anschlussvorrichtungen, welche in den oben aufgeführten Dokumenten offenbart sind, sind umständlich in der Anwendung, weisen viele Teile auf und/oder sind eingeschränkt bzgl. Festigkeit und Beständigkeit der Befestigung.

Ferner offenbart die US 2012/0090263 A1 eine Kabeldurchführung mit einer in eine Bodenplatte einschraubbaren Hülse. Die Hülse weist einen umlaufenden Flansch zur Auflage auf einer Trennfolie auf.

### DARSTELLUNG DER ERFINDUNG

Es ist eine Aufgabe der vorliegenden Erfindung, eine an unterschiedliche Gegebenheiten anpassbare Anschlussvorrichtung anzugeben, welche eine langfristig sichere Befestigung von Zusatzelementen an Bauwerken erlaubt. Die Anschlussvorrichtung sollte zudem möglichst einfach in Herstellung und Handhabung sein.

Zur Lösung dieser Aufgabe wird eine Anschlussvorrichtung vorgeschlagen, wie sie in Anspruch 1 angegeben ist. Vorteilhafte Ausführungsformen sind in den abhängigen Ansprüchen angegeben.

Die vorliegende Erfindung stellt also eine Anschlussvorrichtung zur Befestigung von Zusatzelementen an Bauwerken des Hoch- oder Tiefbaus zur Verfügung, aufweisend
eine Unterkonstruktion, welche zum Verankern der Anschlussvorrichtung an oder in einem Bauwerk dient und eine erste Gewindehülse aufweist, sowie
ein Schraubteil, welches zum Befestigen eines Zusatzelements dient und eine zweite Gewindehülse aufweist,
wobei die Anschlussvorrichtung mittels Ineinanderschrauben der ersten Gewindehülse und der zweiten Gewindehülse bedarfsgerecht bzgl. ihrer Höhe anpassbar ist.
Die Unterkonstruktion weist eine durch die erste Gewindehülse hindurchragende Sicherungsstange auf, welche zur Sicherung des Gewindeeingriffs zwischen der ersten Gewindehülse und der zweiten Gewindehülse mittels Anbringen eines Sicherungselements dient.

Indem die beiden Gewindehülsen unterschiedlich weit ineinander geschraubt werden können, ist die Anschlussvorrichtung bzgl. ihrer Höhe sehr einfach und stufenlos an unterschiedliche Schichtdicken von zum Beispiel einer Isolationsschicht anpassbar. Die Anschlussvorrichtung ragt dabei mit den beiden ineinander geschraubten Gewindehülsen bevorzugt durch die an der Aussenseite des Bauwerks angebrachte Schicht hindurch. Mit Hilfe der Sicherungsstange kann der Zustand der beiden bevorzugt nur teilweise, je nachdem aber auch vollständig ineinander geschraubten Gewindehülsen dauerhaft und effizient gesichert werden. Mittels Anbringen des Sicherungselements an der Sicherungsstange kann somit verhindert werden, dass sich der Schraubzustand der beiden Gewindehülsen nach dem Befestigen des Zusatzelements am Bauwerk unabsichtlich verändert. Insbesondere kann mit Hilfe der Sicherungsstange und dem Sicherungselement der Grad des gegenseitigen Schraubeingriffs der ersten und der zweiten Gewindehülse dauerhaft fixiert werden.

Beim Zusatzelement kann es sich insbesondere um ein Geländer, wie zum Beispiel ein Ganzglasgeländer, eine Haustechnikanlage, eine Solaranlage, eine Antenne oder eine HLK(Heizung, Lüftung, Klima)-Anlage handeln. Möglich ist aber auch ein Zusatzelement in Form eines Klimageräts, einer Absturzsicherung, einer Werbetafel einer Schneefangvorrichtung oder eines Laufrosts. Die Anschlussvorrichtung stellt bevorzugt somit eine modulare Befestigungsvorrichtung dar zum Anbringen von unterschiedlichen Zusatzelementen an ein Bauwerk.

Bei Bauwerken des Hochbaus handelt es sich um Bauwerke, die sich über den Erdboden hinaus und oberhalb von diesem erstrecken. Bauwerke des Tiefbaus befinden sich hingegen mehrheitlich am Erdboden oder unterhalb davon. Beim Bauwerk kann es sich insbesondere um ein Gebäude handeln, wobei die Anschlussvorrichtung bevorzugt zum Befestigen eines Zusatzelements an einer in Bezug auf die Gravitationsrichtung horizontalen Oberfläche dient. Die Oberfläche kann beispielsweise durch ein Flachdach, einen Balkon oder eine Terrasse gebildet sein.

Die Sicherungsstange weist bevorzugt ein Aussengewinde auf. Das Sicherungselement weist dann bevorzugt ein Innengewinde auf, so dass es mit diesem auf die Sicherungsstange aufschraubbar ist. Beim Sicherungselement kann es sich insbesondere um eine Schraubmutter handeln. Indem eine Gewindestange als Sicherungsstange und eine Schraubmutter als Sicherungselement verwendet werden, wird nicht nur eine einfache Herstellung der Anschlussvorrichtung erreicht, sondern die Sicherung der zumindest teilweise ineinander geschraubten Gewindehülsen kann auch besonders effizient und dauerhaft erfolgen. Mit der Verwendung einer Schraubmutter als Sicherungselement kann zudem die Höhe der Anschlussvorrichtung minimiert werden. Grundsätzlich sind aber auch andere Anbringungsarten des Sicherungselements an der Sicherungsstange möglich. So wären beispielsweise auch eine Rast- oder eine Bajonettverbindung denkbar.

Falls die Sicherungsstange ein Aussengewinde aufweist, ist dieses bevorzugt gegenläufig orientiert zu einem Gewinde der ersten Gewindehülse, welches zum Ineinanderschrauben der ersten Gewindehülse und der zweiten Gewindehülse dient. Aufgrund der gegenläufig orientierten Gewinde ist eine gegenseitige Konterung der Gewindeeingriffe möglich, wodurch die Sicherung besonders effizient und dauerhaft wird.

Die erste Gewindehülse der Unterkonstruktion weist bevorzugt ein Innengewinde auf und die zweite Gewindehülse des Schraubteils ein Aussengewinde. Eine allfällige Isolationsschicht kann dadurch satt an den Aussenseiten der beiden Gewindehülsen anliegen, ohne dass sie dabei das Zusammenschrauben der beiden Gewindehülsen behindert. Grundsätzlich wäre es aber selbstverständlich auch denkbar, dass die erste Gewindehülse ein Aussengewinde und die zweite Gewindehülse ein dazu komplementäres Innengewinde aufweist.

Die Sicherungsstange ist bevorzugt länger als die erste Gewindehülse. Gemäss einer insbesondere bevorzugten Ausführungsform ist die Sicherungsstange ungefähr doppelt so lang wie die erste Gewindehülse. Bei der Montage der Anschlussvorrichtung wird die Sicherungsstange bevorzugt gekürzt, um sie an die Höhe der Anschlussvorrichtung und somit die Dicke der Isolationsschicht anzupassen. Das Kürzen der Sicherungsstange kann zum Beispiel mittels einer Säge oder einem Trennschneider durchgeführt werden, nachdem das erste und das zweite Gewinde bedarfsentsprechend ineinander geschraubt worden sind. Durch das Kürzen der Sicherungsstange kann verhindert werden, dass diese zu weit über die restlichen Teile der Anschlussvorrichtung vorsteht. Auch kann mit dem Kürzen der Sicherungsstange ein Anbringen einer Endkappe am Schraubteil (siehe unten) ermöglicht werden, mit welcher eine bestimmungsgemässe Montage der Anschlussvorrichtung gewährleistet wird.

Gemäss einer insbesondere bevorzugten Ausführungsform weist die Anschlussvorrichtung ausserdem eine Endkappe zum Anbringen am Schraubteil und Überdecken des Stirnendes der Sicherungsstange auf. Als eine Endkappe wird in der Regel ein Element angesehen, welches zum Überdecken der Stirnseite des freien Endes der Sicherungsstange ausgebildet ist. Mit einer Endkappe kann sichergestellt werden, dass das Sicherungselement bestimmungsgemäss und insbesondere mit ausreichender Fixierung an der Sicherungsstange angebracht ist. Wenn die Länge der Sicherungsstange bis oben an die am Schraubteil angebrachte Endkappe reicht, ist beispielsweise sichergestellt, dass eine zuvor auf die Sicherungsstange aufgeschraubte Befestigungsmutter nicht nur teilweise im Gewindeeingriff mit dieser steht, sondern ganz. Je nachdem kann ein korrektes Anbringen der Endkappe auf das Schraubteil auch eine Gewährleistung einer ausreichenden Abdichtung des Schraubteils gegenüber der Sicherungsstange bedeuten.

Bevorzugt ist das Sicherungselement radial und, insbesondere bevorzugt, axial innerhalb der Endkappe angeordnet, wenn die Endkappe am Schraubteil angebracht ist. Mit anderen Worten bildet die Endkappe bevorzugt einen Aufnahmeraum zur radialen und, insbesondere bevorzugt, axialen Aufnahme des Sicherungselements. Der von der Endkappe begrenzte Aufnahmeraum ist vorteilhaft bzgl. seiner Form komplementär zu derjenigen des Sicherungselements ausgebildet.

Besonders bevorzugt ist es, wenn die Endkappe dazu ausgebildet ist, beim Anbringen am Schraubteil eine feste Verbindung mit dem Schraubteil einzugehen. Die Verbindung zwischen der Endkappe und dem Schraubteil kann insbesondere mittels eines Gewindeeingriffs erfolgen, das heisst bei der festen Verbindung handelt es sich um eine Schraubverbindung. In diesem Fall weist die Endkappe bevorzugt ein Aussengewinde und das Schraubteil ein Innengewinde auf, in welches die Endkappe einschraubbar ist. Durch die Verbindung mit dem Schraubteil ist die Endkappe fest am Schraubteil gehalten. Die Endkappe kann insbesondere auch zur Abdichtung des Schraubteils im Bereich der Sicherungsstange dienen.

Bevorzugt ist an der Endkappe ein Dichtungselement angeordnet, welches zur Abdichtung des Schraubteils gegenüber der Sicherungsstange dient. Das Dichtungselement ist vorteilhaft ringförmig ausgebildet, so dass es die Sicherungsstange umlaufend umschliessen kann.

In einer bevorzugten Ausführungsform weist das Schraubteil eine Abdeckplatte auf, an welcher die zweite Gewindehülse angebracht ist, und welche zum Aufliegen auf einer Aussenschicht, insbesondere einer Isolationsschicht, des Bauwerks dient. Die Abdeckplatte, welche vorteilhaft eine kreisrunde Fläche bildet, kann dabei insbesondere zur Abdichtung des Schraubteils und somit der Anschlussvorrichtung gegenüber der Aussenhaut des Bauwerks dienen. So kann beispielsweise ein Abdichtelement, wie ein Abdichtkleber oder eine Abdeckschicht, grossflächig an der Abdeckplatte und einen um diese herum angeordneten Bereich der Aussenhaut des Bauwerks angebracht werden. Beim Abdichtelement handelt es sich bevorzugt um einen Kleber oder Folie. Das Abdichtelement kann insbesondere aus einem Kunststoff, aus Bitumen oder aus Polymerbitumen hergestellt sein. Der durch z.B. eine Isolationsschicht notwendige Durchbruch zur Befestigung des Zusatzelements ist dadurch sehr einfach und effizient abdichtbar. Eine allfällige weitere Abdichtung kann wie bereits weiter oben erwähnt im Bereich zwischen Sicherungsstange und dem Schraubteil ebenfalls z.B. mit Hilfe eines Abdichtrings sehr einfach und effizient erreicht werden.

Vorteilhaft ist die zweite Gewindehülse drehfest mit der Abdeckplatte verbunden, so dass die zweite Gewindehülse mittels Drehen der Abdeckplatte in die erste Gewindehülse der Unterkonstruktion einschraubbar ist. Bevorzugt sind die zweite Gewindehülse und die Abdeckplatte nur mittels Zerstörung voneinander trennbar und insbesondere bevorzugt miteinander verschweisst oder gemeinsam als Ganzes einstückig herstellt. Dadurch ist eine Abdichtung zwischen der zweiten Gewindehülse und der Abdeckplatte sichergestellt.

An der Abdeckplatte sind vorzugsweise eines oder mehrere Befestigungselemente angebracht oder anbringbar, welche zum Befestigen des Zusatzelements an der Anschlussvorrichtung dienen. Bei dem oder den Befestigungselementen kann es sich insbesondere um Gewindestangen handeln. Das oder die Befestigungselemente können z.B. an der Abdeckplatte angeschraubt sein. Bevorzugt sind sie jedoch mit dieser verschweisst.

In einer bevorzugten Ausführungsform weist die Unterkonstruktion eine Trägerplatte auf, an welcher die erste Gewindehülse sowie, bevorzugt, die Sicherungsstange, angebracht sind. Die Trägerplatte, welche vorteilhaft eine rechteckige, insbesondere quadratische oder eine kreisrunde Fläche bildet, dient bevorzugt insbesondere Verbindungselement und Träger der ersten Gewindehülse mit der Sicherungsstange. Vorzugsweise erstrecken sich die erste Gewindehülse und die Sicherungsstange jeweils senkrecht von der Trägerplatte aus nach oben hin. Mit Ausdrücken wie "nach oben hin" oder "Höhe" ist jeweils die Richtung senkrecht zu derjenigen Oberfläche gemeint, an welcher das Zusatzelement mittels der Anschlussvorrichtung am Bauwerk befestigt wird.

Vorteilhaft ist die erste Gewindehülse drehfest mit der Trägerplatte verbunden. Bevorzugt sind die erste Gewindehülse und die Trägerplatte sowie vorteilhaft die Sicherungsstange nur mittels Zerstörung voneinander trennbar und insbesondere bevorzugt miteinander verschweisst oder gemeinsam als Ganzes einstückig herstellt. Die Herstellung und Handhabung der Unterkonstruktion vereinfacht sich dadurch.

An der Trägerplatte sind vorzugsweise eines oder mehrere Ankerelemente angebracht oder anbringbar, welche zur Verankerung der Unterkonstruktion an oder im Bauwerk dienen. Bei dem oder den Ankerelementen kann es sich insbesondere um Gewindestangen handeln. Alternativ kann es sich bei dem oder den Ankerelementen zum Beispiel auch um Stangenelemente mit aufgerauter oder gerillter Aussenfläche handeln. Das oder die Ankerelemente können z.B. an der Trägerplatte angeschraubt oder alternativ mit dieser verschweisst sein. Der Untergrund, in welchem die Unterkonstruktion mit dem oder den Ankerelementen im Bauwerk verankert werden, kann insbesondere durch Beton gebildet sein. Das oder die Ankerelemente sind daher vorteilhaft zur Verankerung in Beton ausgebildet.

Das Schraubteil und die Unterkonstruktion sind bevorzugt jeweils aus einem Metall, insbesondere aus einem nichtrostenden Stahl, hergestellt und vorteilhaft jeweils als Ganzes einstückig ausgebildet.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Seitenansicht einer bestimmungsgemäss montierten und in einem Betonuntergrund verankerten Anschlussvorrichtung gemäss einer bevorzugten, erfindungsgemässen Ausführungsform;
- Fig. 2: eine vergrösserte Detailansicht des in der Fig. 1 gestrichelt umrandeten Bereiches;
- Fig. 3: eine zentrale Querschnittsansicht der Anschlussvorrichtung der Fig. 1;
- Fig. 4: eine vergrösserte Detailansicht des in der Fig. 3 gestrichelt umrandeten Bereiches;
- Fig. 5: eine perspektivische Explosionsansicht der Anschlussvorrichtung der Fig. 1;
- Fig. 6: eine vergrösserte Detailansicht des in der Fig. 5 gestrichelt umrandeten Bereiches mit Schraubteil, Endkappe, Sicherungsmutter und Unterlagdichtscheibe;
- Fig. 7: eine perspektivische Ansicht aus einer anderen Blickrichtung des Schraubteils der Fig. 6;
- Fig. 8: eine Seitenansicht des Schraubteils der Fig. 6;
- Fig. 9: eine vergrösserte Detailansicht des in der Fig. 5 strichpunktiert umrandeten Bereiches mit Unterkonstruktion, oberen und unteren Fixiermuttern sowie Befestigungsmuttern und dazugehörige Unterlagscheiben; sowie
- Fig. 10: eine zentrale Querschnittsansicht der bestimmungsgemäss montierten und in einem Betonuntergrund verankerten Anschlussvorrichtung der Fig. 1 mit daran befestigtem Ganzglasgeländer.

### BESCHREIBUNG BEVORZUGTER AUSFÜHRUNGSFORMEN

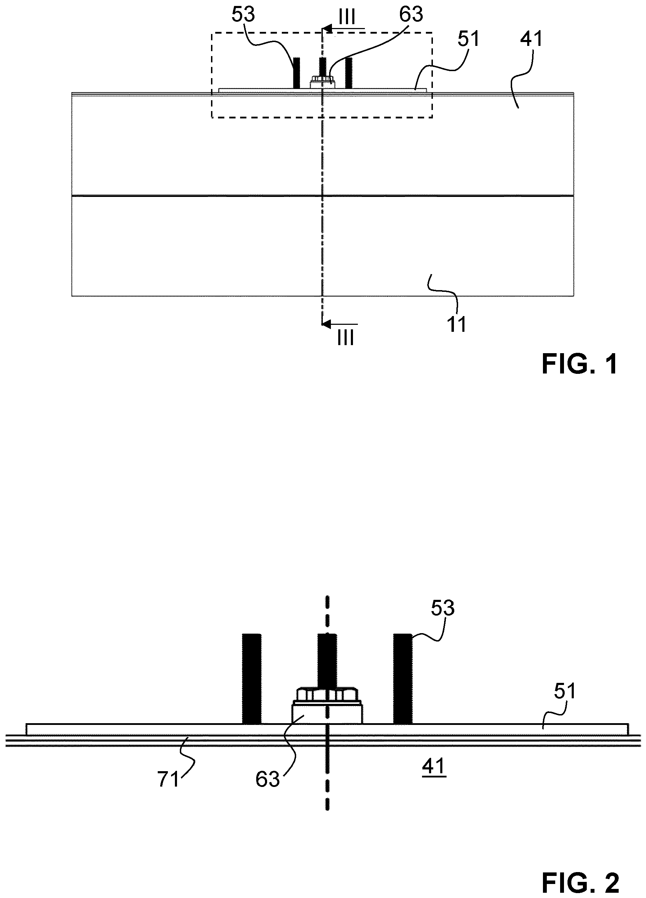

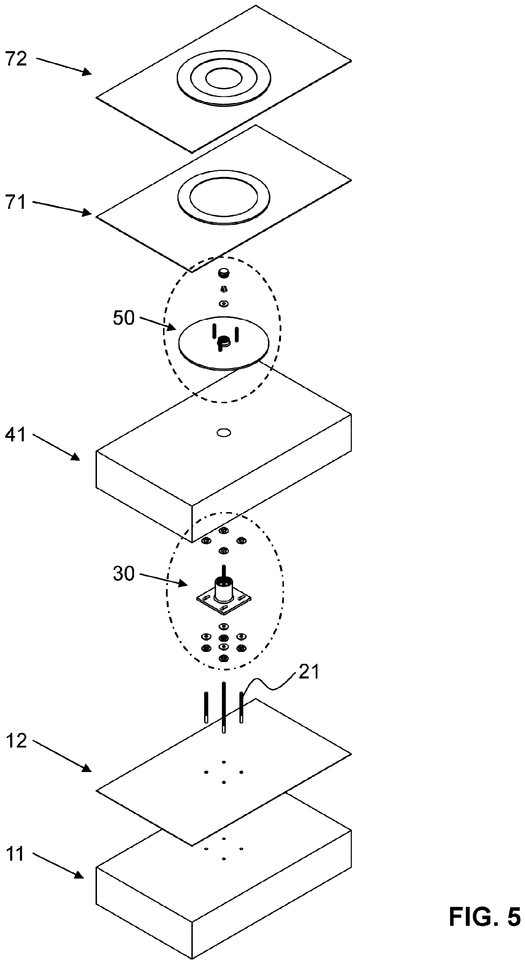

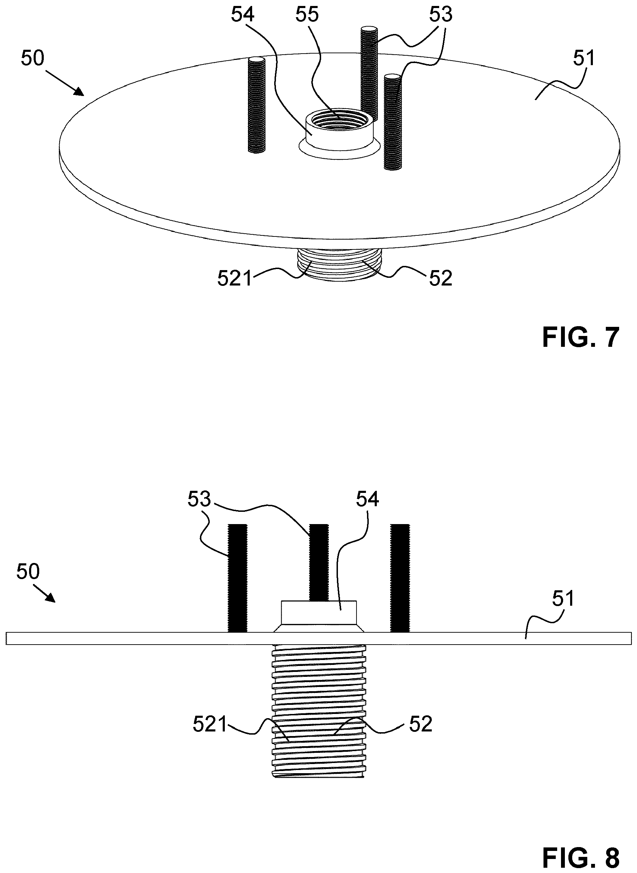

In den Figuren 1 bis 10 ist eine bevorzugte Ausführungsform einer erfindungsgemässen Anschlussvorrichtung gezeigt. Gleiche oder gleich wirkende Elemente sind jeweils mit demselben Bezugszeichen versehen.

Die in den Figuren gezeigte Anschlussvorrichtung dient zur Befestigung eines Zusatzelements an einem Bauwerk des Hoch- oder Tiefbaus. Beim Zusatzelement kann es sich beispielsweise um ein Ganzglasgeländer, eine Solaranlage, eine Antenne, ein Klimagerät, einer Absturzsicherung, eine Schneefangvorrichtung oder einen Laufrost handeln.

Das Bauwerk, in der Regel ein Gebäude, bildet hier einen Betonuntergrund 11, auf welchem eine Isolationsschicht 41 angeordnet ist, die zur Wärmedämmung des Bauwerks dient. Zur Befestigung des Zusatzelements am Bauwerk muss dieses via die Anschlussvorrichtung im Betonuntergrund 11 verankert werden. Eine Verankerung in der Isolationsschicht 41 ist aufgrund ihrer nur geringfügig vorhandenen Festigkeit nicht möglich. Da die Dicke der Isolationsschicht 41 von Bauwerk zu Bauwerk unterschiedlich sein kann, ist die Anschlussvorrichtung bzgl. ihrer Höhe einstellbar, wie es weiter unten erklärt wird. Um das Eindringen von Feuchtigkeit in die Isolationsschicht 41 zu verhindern, ist diese mit einer Abdichtungsfolie 71 überzogen, wie es in der Figur 2 erkennbar ist. Die Abdichtungsfolie 71 kann aus Bitumen oder Ethylen-Propylen-Dien-Kautschuk (EPDM) oder einem anderen Material hergestellt sein.

Die bestimmungsgemäss am Bauwerk montierte Anschlussvorrichtung ist in den Figuren 1 und 2 von der Seite gezeigt. Von aussen her sichtbar sind dabei von der Anschlussvorrichtung lediglich eine auf der Abdichtungsfolie 71 aufliegende Abdeckplatte 51 mit drei daran befestigten Gewindestangen 53, welche zum Befestigen des Zusatzelements dienen. Ausserdem sichtbar ist eine gegenüber der Abdeckplatte 51 vorstehende, zentral angeordnete Endkappe 63.

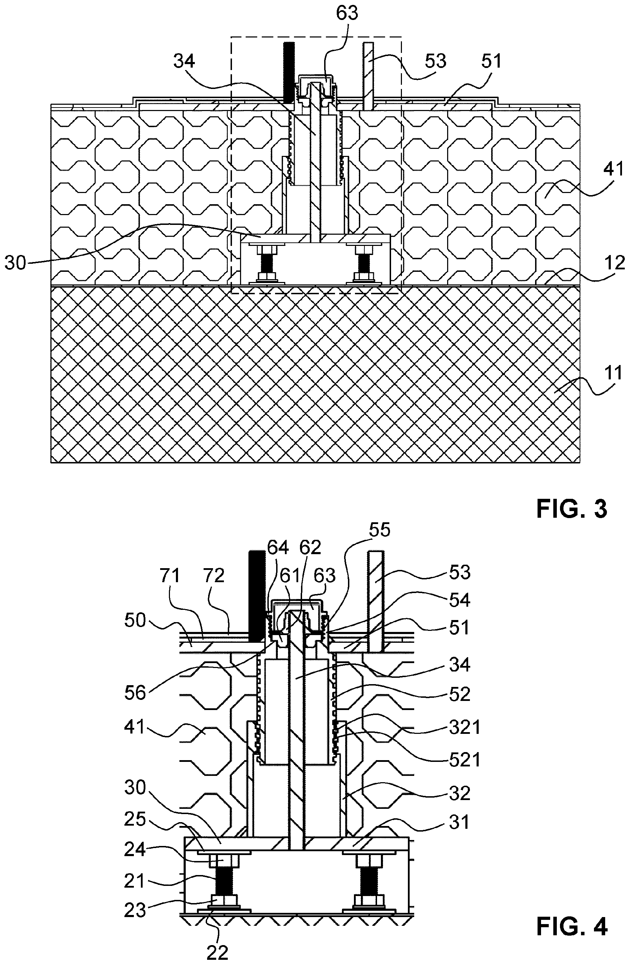

Um die Feuchtigkeitssperre zur Isolationsschicht 41 hin auch im Bereich der Anschlussvorrichtung zu gewährleisten, wird an der Oberseite der Abdeckplatte 51 ein Abdichtelement in Form von zum Beispiel einer weiteren Bitumenlage angebracht, welches bevorzugt grossflächig mit der Abdeckplatte 51 und der Abdichtungsfolie 71 verklebt wird. Die Abdeckplatte 51 ist dann zwischen den beiden Abdichtungsfolien angeordnet. Alternativ kann die Abdeckplatte 51 auch auf der Isolationsschicht 41 direkt aufliegen und von einer oder zwei Abdichtungsfolien 71, 72 überzogen sein, wie es in den Figuren 3 und 4 gezeigt ist. In diesem Fall ist die Abdeckplatte 51 zwischen der Isolationsschicht 41 und der Abdichtungsfolie 71 angeordnet.

In den Figuren 3 und 4 sind auch diejenigen Komponenten der Anschlussvorrichtung erkennbar, welche bei bestimmungsgemäss erfolgter Montage innerhalb der Isolationsschicht 41 angeordnet sind. Wie aus der Figur 3 zudem hervorgeht, ist zwischen dem Betonuntergrund 11 und der Isolationsschicht 41 eine Dampfsperre/-bremse 12 angeordnet. Die Dampfsperre/-bremse 12 betrifft eine im Bauwesen übliche Massnahme, um bei luftdichter Verlegung den Feuchtetransport durch Diffusion und Konvektion zu verhindern.

Die Anschlussvorrichtung weist als Hauptkomponenten eine Unterkonstruktion 30 und ein Schraubteil 50 auf. Sowohl die Unterkonstruktion 30 als auch das Schraubteil 50 sind als Ganzes einstückig aus einem Metall hergestellt.

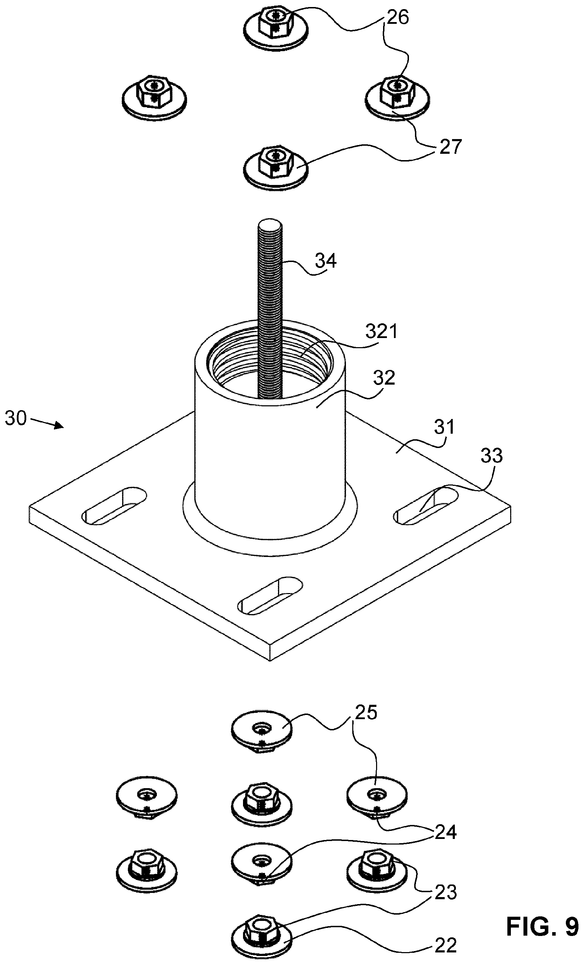

Die Unterkonstruktion 30, welche insbesondere in der Figur 9 gut erkennbar ist, weist eine hier quadratische Trägerplatte 31 auf, an welcher eine Verbindungshülse 32 sowie eine Sicherungsgewindestange 34 angeschweisst sind. Die Verbindungshülse 32 sowie die Sicherungsgewindestange 34 sind zentral an der Oberseite der Trägerplatte 31 angeordnet und erstrecken sich von dieser aus entlang ihrer jeweiligen Längsrichtung senkrecht nach oben hin. Die Sicherungsgewindestange 34 ragt sich dabei zentral durch die Verbindungshülse 32 hindurch. Bei der Verbindungshülse 32 handelt es sich um eine Gewindehülse mit einem Innengewinde 321.

Zur Verankerung der Unterkonstruktion 30 im Betonuntergrund 11 sind mehrere als Ankerelemente dienende Gewindestangen 21 derart an der Trägerplatte 31 anbringbar, dass sie sich von dieser aus entlang ihrer jeweiligen Längsrichtung nach unten hin erstrecken. Zur Befestigung der Gewindestangen 21 an der Trägerplatte 31, weist diese vier in den Eckbereichen angeordnete Langlöcher 33 auf. Mittels einer oberen Fixiermutter 26 und einer unteren Fixiermutter 24 ist in jedem der Langlöcher 33 jeweils eine Gewindestange 21 anbringbar. Zwischen den Fixiermuttern 24, 26 und der Trägerplatte wird bevorzugt jeweils eine Unterlagscheibe 25 bzw. 27 angeordnet, wie es insbesondere in der Figur 9 gut erkennbar ist. Aufgrund der beidseitig zur Trägerplatte 31 erfolgenden Befestigung der Gewindestangen 21 mittels der Fixiermuttern 24 und 26 kann die Unterkonstruktion 30 sehr einfach an einer beliebigen Stelle entlang der Längsrichtung der Gewindestangen 21 fixiert werden.

Die Verbindungshülse 32 der Unterkonstruktion 30 ragt üblicherweise, wie es in den Figuren 3 und 4 gezeigt ist, nach oben hin in die Isolationsschicht 41 hinein. Die Sicherungsgewindestange 34 erstreckt sich dabei ungefähr doppelt so weit nach oben hin wie die Verbindungshülse 32.

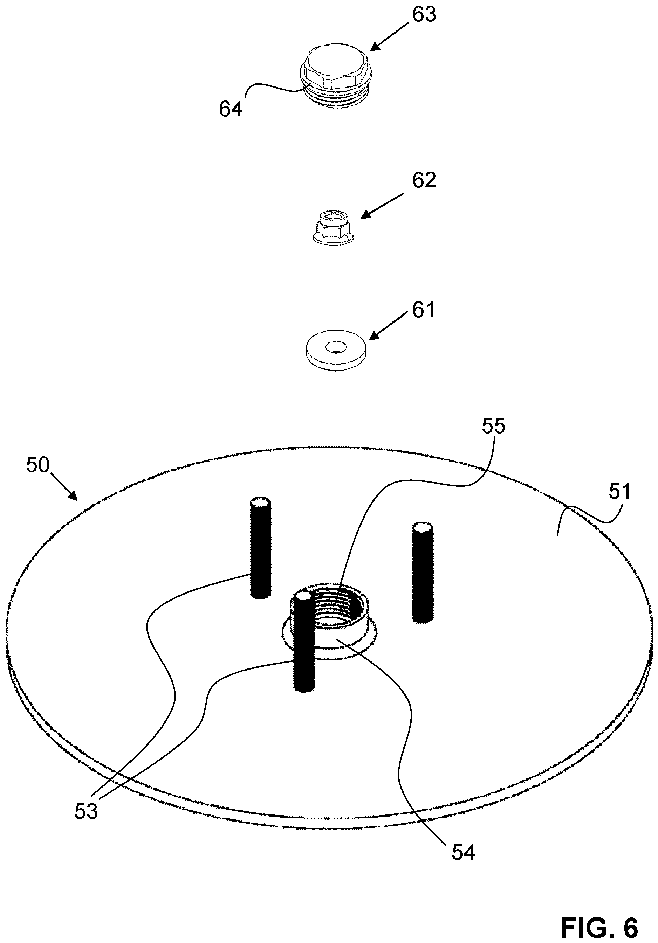

Das in die Unterkonstruktion 30 einschraubbare Schraubteil 50 ist insbesondere in den Figuren 6 bis 8 gut erkennbar. Das Schraubteil 50 weist eine untere Hülse 52 auf, bei welcher es sich um eine Gewindehülse mit einem Aussengewinde 521 handelt. Das Aussengewinde 521 ist komplementär zum Innengewinde 321 der Verbindungshülse 32 der Unterkonstruktion 30 ausgebildet, so dass die untere Hülse 52 in die Verbindungshülse 32 einschraubbar ist. Die Länge der unteren Hülse 52 ist ungefähr gleich gross wie diejenige der Verbindungshülse 32 der Unterkonstruktion.

Die untere Hülse 52 ist mit ihrem oberen Ende an der Unterseite der Abdeckplatte 51 angebracht. Die Abdeckplatte 51 beschreibt eine kreisförmige Fläche, von welcher aus sich die mittig angeordnete untere Hülse 52 senkrecht nach unten hin erstreckt. Auf der gegenüberliegenden oberen Seite der Abdeckplatte 51 erstreckt sich eine ebenfalls mittig angeordnete, obere Hülse 54 senkrecht nach oben hin. Die obere Hülse 54 weist einen kleineren Aussen- und Innenradius auf als die untere Hülse 52 und ist um ein ganzzahliges Vielfaches kürzer ausgebildet als die untere Hülse 52. Die Abdeckplatte 51 weist im Bereich der Hülsen 52, 54 eine kreisrunde Öffnung auf, so dass es einen Durchgang gibt von der oberen Hülse 54 zur unteren Hülse 52. Während die untere Hülse 52 ein Aussengewinde 521 aufweist, welches zum Einschrauben des Schraubteils 50 in das Innengewinde 321 der Verbindungshülse 32 dient, weist die obere Hülse 54 ein Innengewinde 55 auf, welches zum Einschrauben der Endkappe 63 dient. Die untere Hülse 52 und die obere Hülse 54 sind gemeinsam einstückig ausgebildet.

Radial beabstandet zur oberen Hülse 54 sind drei Gewindestangen 53 an der Oberseite der Abdeckplatte 51 angebracht. Bei den Gewindestangen 53, welche in Umfangsrichtung in regelmässigen Abständen angeordnet sind und sich senkrecht von der Abdeckplatte nach oben hin erstrecken, handelt es sich um Befestigungselemente, die zum Befestigen des Zusatzelement an der Anschlussvorrichtung und somit am Bauwerk dienen. Ebenso wie die untere und die obere Hülse 52, 54 sind auch die Gewindestangen 53 bevorzugt mit der Abdeckplatte 51 verschweisst und somit einstückig mit dieser ausgebildet.

Zur Sicherung des Gewindeeingriffs zwischen der Verbindungshülse 32 der Unterkonstruktion und der unteren Hülse 52 des Schraubteils 50 wird eine Sicherungsmutter 62 auf die Sicherungsgewindestange 34 aufgeschraubt. Die Sicherungsmutter 62 ist insbesondere in der Figur 6 gut erkennbar in Alleinstellung und in den Figuren 3 und 4 in dem auf die Sicherungsgewindestange 34 aufgeschraubten Zustand. Durch das Aufschrauben der Sicherungsmutter 62 auf das Aussengewinde der Sicherungsgewindestange 34 gerät diese, allenfalls via eine Zentrierscheibe 61, in Anlage mit einem Teil der Oberseite des Schraubteils 50. In der in den Figuren 3 und 4 gezeigten Ausführungsform liegt die Sicherungsmutter 62 via die Zentrierscheibe 61 auf einem radial umlaufend nach innen ragenden Vorsprung auf, der im Bereich des Übergangs der unteren Hülse 52 zur oberen Hülse 54 angeordnet ist. Das Schraubteil 50 und die Unterkonstruktion 30 werden dadurch zueinander hin gezogen oder zumindest verhindert die Sicherungsmutter 62 in Kombination mit der Sicherungsgewindestange 34, dass das Schraubteil 50 und die Unterkonstruktion 30 voneinander entfernt werden können. Das Schraubteil 50 kann dann nicht mehr von der Unterkonstruktion 30 weggeschraubt werden. Somit sichert die als Sicherheitselement dienende, auf die Sicherungsgewindestange 34 aufgeschraubte Sicherungsmutter 62 den Gewindeeingriff zwischen der Verbindungshülse 32 und der unteren Hülse 52.

Bevorzugt ist das Innengewinde 321 der Verbindungshülse 32 gegenläufig orientiert zum Aussengewinde der Sicherungsgewindestange 34, es kann aber auch gleichläufig orientiert sein. Der Gewindeeingriff zwischen der Sicherungsmutter 62 und der Sicherungsgewindestange 34 kontert dann denjenigen zwischen der Verbindungshülse 32 und der unteren Hülse 52, wodurch die Sicherung noch verstärkt wird.

Um eine effiziente und ausreichende Abdichtung auch im Bereich der die Abdeckplatte 51 durchragenden Sicherungsgewindestange 34 zu erreichen und sicherzustellen, kann zusätzlich oder alternativ zur Zentrierscheibe 61 zwischen der Sicherungsmutter 62 und dem Schraubteil 30 (d.h. dem Vorsprung 56) eine Unterlagdichtscheibe angeordnet sein. Die Unterlagdichtscheibe ist bevorzugt aus einem flexiblen, zur Abdichtung geeigneten Material, wie insbesondere einem Kunststoffmaterial, hergestellt.

Wie insbesondere aus der Figur 4 hervorgeht, weist die Zentrierscheibe 61 eine zentrale Öffnung auf, welche umlaufend von einem nach unten ragenden Wulst begrenzt wird. Durch die Einklemmung der Zentrierscheibe 61 zwischen der Sicherungsmutter 62 und dem Vorsprung 56 wird diese aufgrund des Wulstes optimal zentriert. Falls es sich um eine Unterlagdichtscheibe handelt, hat der nach unten ragende Wulst den Vorteil, dass die Unterlagdichtscheibe dadurch einerseits umlaufend gegen den Vorsprung 56 und andererseits umlaufend gegen die Sicherungsgewindestange 34 gepresst, wodurch eine effiziente Abdichtung erfolgt. Die Zentrierscheibe 61 oder die Unterlagdichtscheibe könnte grundsätzlich auch an der Unterseite der Sicherungsmutter 62 befestigt oder sogar einstückig mit dieser ausgebildet sein.

Im bestimmungsgemäss montierten Zustand der Anschlussvorrichtung (siehe Figuren 3 und 4) ist die Endkappe 63 am Schraubteil 50 angebracht, so dass sie die Sicherungsgewindestange 34 radial umgibt sowie diese ein Stück weit axial in einem nach unten hin offenen Innenraum aufnimmt. Ausserdem im erwähnten Innenraum aufgenommen ist die Sicherungsmutter 62. Die Endkappe 63 weist ein Aussengewinde auf, mit welchem sie in das Innengewinde 55 der oberen Hülse 54 des Schraubteils 50 eingeschraubt ist. Die Endkappe 63 verhindert dadurch ein unabsichtliches Lösen der auf die Sicherungsgewindestange 34 aufgeschraubten Sicherungsmutter 62. Im vollständig eingeschraubten Zustand liegt die Endkappe 63 mit einem umlaufend radial abstehenden Dichtring 64 auf der oberen Kante der oberen Hülse 54 auf, wie es in der Figur 4 erkennbar ist.

Zur Montage der Anschlussvorrichtung wird in einem ersten Schritt eine der Anschlussvorrichtung entsprechende Aussparung in die Isolationsschicht 41 geschnitten, falls diese bereits auf dem Betonuntergrund 11 angebracht ist. Danach werden die Gewindestangen 21 im Betonuntergrund 21 verankert, wozu sie beispielsweise in diesen eingeklebt, eingegossen oder eingeschraubt werden. Die Gewindestangen 21 ragen dabei durch die Dampfsperre/-bremse 12 hindurch. Um zu verhindern, dass im Bereich der Gewindestangen 21 Feuchtigkeit in den Betonuntergrund 11 eindringen kann, wird an diese jeweils eine Dichtmutter 23 angebracht, welche an der Oberseite des Betonuntergrundes 11 und/oder der Dampfsperre/-bremse 12 satt aufliegt. Gegebenenfalls kann eine Unterlagscheibe 22 vorgesehen sein, um die Abdichtung zu bewirken bzw. dazu beizutragen.

Nach dem Verankern der Gewindestangen 21 im Betonuntergrund 11 kann die Unterkonstruktion 30 mit Hilfe der unteren Fixiermuttern 24 und den Unterlagscheiben 25 auf einer gewünschten Höhe angeordnet und schliesslich mit den oberen Fixiermuttern 26 und den Unterlagscheiben 27 an den Gewindestangen 21 fixiert werden. Vor dem endgültigen Fixieren erlauben die Langlöcher 33 eine seitliche Feinausrichtung der Unterkonstruktion 30 relativ zu den Gewindestangen 21. Nach dem Anziehen der oberen Fixermuttern 26 ist die Trägerplatte 31 zwischen den unteren und oberen Fixiermuttern 24, 26 eingespannt und die Unterkonstruktion 30 dadurch fixiert. Durch die Möglichkeit, die Unterkonstruktion 30 auf einer beliebigen Höhe an den Gewindestangen 21 und somit über dem Betonuntergrund 11 zu befestigen, ist die Anschlussvorrichtung flexibel an unterschiedliche Gegebenheiten des Bauwerks anpassbar.

Nach der Befestigung der Unterkonstruktion 30 wird die Isolationsschicht 41 im Bereich der Anschlussvorrichtung derart angeordnet, dass sie radial von aussen heran der Aussenseite der Verbindungshülse 32 anliegt, diese aber nach oben hin etwas überragt.

Als nächster Schritt wird das Schraubteil 50 mit seiner unteren Hülse 52 in die Verbindungshülse 32 der Unterkonstruktion 30 eingeschraubt bis die Abdeckplatte 51 mit ihrer Unterseite auf der Oberseite der Isolationsschicht 41 bzw. einer allenfalls darauf angebrachten unteren Abdichtungsfolie 71 aufliegt. Durch die Möglichkeit der Höheneinstellung mittels bedarfsweisem Ineinanderschrauben der Hülsen 32 und 52 ist die Anschlussvorrichtung sehr einfach an die Dicke der Isolationsschicht 41 anpassbar. Indem die Isolationsschicht 41 sowohl an der Verbindungshülse 32 der Unterkonstruktion 30 als auch an der unteren Hülse 52 des Schraubteils 50 seitlich umlaufend eng anliegt, wird die Wärmedämmwirkung der Isolationsschicht 41 von der Anschlussvorrichtung nur minimal beeinträchtigt. Die Verbindungshülse 32 und die Hülsen 52, 54 können ausserdem innenseitig jeweils mit einem geeigneten Dämmmaterial ausgedämmt werden.

Zur Sicherung des Gewindeeingriffs der Verbindungshülse 32 und der unteren Hülse 52 wird anschliessend die Zentrierscheibe 61 eingesetzt und die Sicherungsmutter 62 an der Sicherungsgewindestange 34 festgeschraubt. Nach dem Festziehen der Sicherungsmutter 62 oder unmittelbar davor wird die Sicherungsgewindestange 34 z.B. mittels einer Säge auf der Höhe der Oberkante der oberen Hülse 54 abgeschnitten.

Schliesslich wird die Endkappe 63 am Schraubteil 50 angebracht, indem sie in die obere Hülse 54 des Schraubteils 50 eingeschraubt wird. Der radial umlaufende Flansch der Endkappe 63 gerät dabei in Kontakt mit der Oberkante der oberen Hülse 54. Durch das vollständige Einschrauben der Endkappe 63 ist sichergestellt, dass die Dichtigkeit der Konstruktion mithilfe des äusseren Dichtrings 64 der Endkappe 63 gegen eintretende Feuchtigkeit gewährleistet ist.

Um eine wirksame Abdichtung auch im Bereich der Anschlussvorrichtung zu gewähren, wird als letzter Schritt die obere Abdichtungsfolie 72 auf der Abdeckplatte 51 und den die Anschlussvorrichtung umliegenden Bereich der unteren Abdichtungsfolie 71 angebracht.

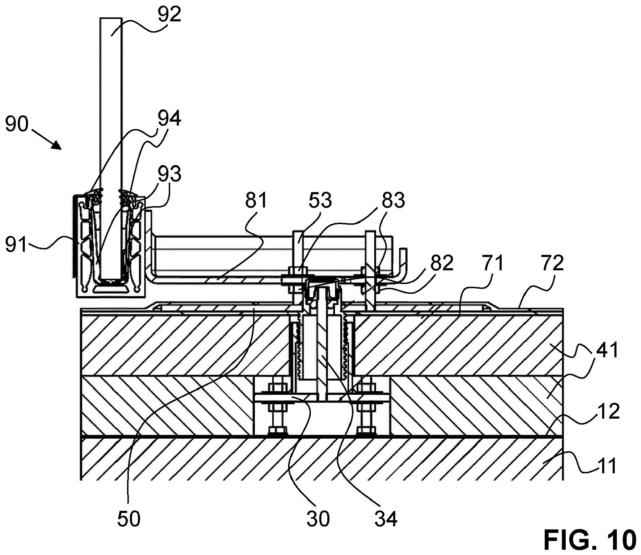

In der Figur 10 ist die bestimmungsgemäss und fertig montierte Anschlussvorrichtung mit einem daran befestigten Zusatzelement in Form eines Ganzglasgeländers 90 gezeigt. Wie in der Figur 10 erkennbar ist, werden hier zur Wärmedämmung im Bereich der Anschlussvorrichtung zwei aufeinander angebrachte Isolationsschichten 41 verwendet.

Das Ganzglasgeländer 90 ist mittels eines Befestigungsteils 81 an der Anschlussvorrichtung befestigt. Hierzu ist das Befestigungsteil 81 mittels unteren Muttern 82 und oberen Muttern 83 an den Gewindestangen 53 des Schraubteils 50 fixiert.

Das Ganzglasgeländer 90 weist ein U-Profil 91 auf, welches am Befestigungsteil 81 angebracht ist und zu Halterung einer Glasscheibe 92 dient. Zur Fixierung der Glasscheibe 92 im U-Profil 91 dienen Klemmelemente 93, die insbesondere keilförmig ausgebildet sein können. Seitlich zur Glasscheibe 92 sind an der Oberseite des U-Profils 91 Dichtungen 94 angeordnet, um das Eindringen von Wasser und Schmutzpartikeln in das U-Profil zu verhindern.

Die vorliegende Erfindung ist selbstverständlich nicht auf die angegebenen, beispielhaften Ausführungsformen beschränkt, sondern eine Vielzahl von Abwandlungen sind möglich. So ist beispielsweise das Vorhandensein der Trägerplatte 31 nicht zwingend notwendig. Die Verbindungshülse 32 könnte auch direkt oder mit anderen Mitteln im Betonuntergrund 11 verankert werden. Auf die Möglichkeit der Höheneinstellung mittels der Gewindestangen 21 könnte in diesem Fall oder auch sonst verzichtet werden. Auch muss die Anschlussvorrichtung nicht unbedingt zur Verankerung in einem Betonuntergrund ausgebildet sein, sondern könnte beispielsweise auch zur Verankerung in oder an einer Holz- oder Metallstruktur des Bauwerks ausgebildet sein. Auch wenn dies nicht bevorzugt ist, könnte die Abdeckplatte 51 genauso gut weggelassen werden. Die Abdichtung zur Anschlussvorrichtung hin könnte dann beispielsweise direkt an der unteren oder oberen Hülse des Schraubteils 50 bewerkstelligt werden. Eine Vielzahl weiterer Modifikationen sind denkbar.

### BEZUGSZEICHENLISTE

- 11: Betonuntergrund
- 12: Dampfsperre/-bremse

- 21: Gewindestange
- 22: Unterlagscheibe
- 23: Dichtmutter
- 24: Untere Fixiermutter
- 25: Unterlagscheibe
- 26: Obere Fixiermutter
- 27: Unterlagscheibe

- 30: Unterkonstruktion
- 31: Trägerplatte
- 32: Verbindungshülse
- 321: Innengewinde
- 33: Langloch
- 34: Sicherungsgewindestange

- 41: Isolationsschicht

- 50: Schraubteil
- 51: Abdeckplatte
- 52: Untere Hülse
- 521: Aussengewinde
- 53: Gewindestange
- 54: Obere Hülse
- 55: Innengewinde
- 56: Vorsprung
- 61: Zentrierscheibe
- 62: Sicherungsmutter
- 63: Endkappe
- 64: Dichtring

- 71: Abdichtungsfolie
- 72: Abdichtungsfolie

- 81: Befestigungsteil
- 82: Untere Mutter
- 83: Obere Mutter

- 90: Ganzglasgeländer
- 91: U-Profil
- 92: Glasscheibe
- 93: Klemmelement
- 94: Dichtung

## Patentansprüche

1. Anschlussvorrichtung zur Befestigung von Zusatzelementen (90) an Bauwerken des Hoch- oder Tiefbaus, aufweisend
eine Unterkonstruktion (30), welche zum Verankern der Anschlussvorrichtung an oder in einem Bauwerk dient und eine erste Gewindehülse (32) aufweist, sowie
ein Schraubteil (50), welches zum Befestigen eines Zusatzelements (90) dient und eine zweite Gewindehülse (52) aufweist,
wobei die Anschlussvorrichtung mittels Ineinanderschrauben der ersten Gewindehülse (32) und der zweiten Gewindehülse (52) bedarfsgerecht bzgl. ihrer Höhe anpassbar ist,
**dadurch gekennzeichnet, dass**
die Unterkonstruktion (30) eine durch die erste Gewindehülse (32) hindurchragende Sicherungsstange (34) aufweist, welche zur Sicherung des Gewindeeingriffs zwischen der ersten Gewindehülse (32) und der zweiten Gewindehülse (52) mittels Anbringen eines Sicherungselements (62) dient.

2. Anschlussvorrichtung nach Anspruch 1, wobei die Sicherungsstange (34) ein Aussengewinde aufweist, das bevorzugt gegenläufig orientiert ist zu einem Gewinde (321) der ersten Gewindehülse (32), das zum Ineinanderschrauben der ersten Gewindehülse (32) und der zweiten Gewindehülse (52) dient.

3. Anschlussvorrichtung nach Anspruch 1 oder 2, ausserdem aufweisend eine Endkappe (63) zum Anbringen an das Schraubteil (50) derart, dass es eine Stirnseite der Sicherungsstange (34) überdeckt.

4. Anschlussvorrichtung nach Anspruch 3, wobei das Sicherungselement (62) radial und bevorzugt axial innerhalb der Endkappe (63) angeordnet ist, wenn die Endkappe (63) am Schraubteil (50) angebracht ist.

5. Anschlussvorrichtung nach Anspruch 3 oder 4, wobei die Endkappe (63) dazu ausgebildet ist, eine dichte Verbindung mit dem Schraubteil (50) einzugehen.

6. Anschlussvorrichtung nach einem der Ansprüche 3 bis 5, wobei die Verbindung zwischen der Endkappe (63) und dem Schraubteil (50) mittels eines Gewindeeingriffs erfolgt.

7. Anschlussvorrichtung nach einem der vorhergehenden Ansprüche, wobei das Schraubteil (50) eine Abdeckplatte (51) aufweist, an welcher die zweite Gewindehülse (52) angebracht ist, und welche zum Aufliegen auf einer Aussenschicht, insbesondere einer Isolationsschicht (41), des Bauwerks dient.

8. Anschlussvorrichtung nach Anspruch 7, wobei die zweite Gewindehülse (52) und die Abdeckplatte (51) nur mittels Zerstörung voneinander trennbar sind und bevorzugt miteinander verschweisst oder gemeinsam als Ganzes einstückig herstellt sind.

9. Anschlussvorrichtung nach Anspruch 7 oder 8, wobei an der Abdeckplatte (51) eines oder mehrere Befestigungselemente (53) angebracht oder anbringbar sind, welche zum Befestigen des Zusatzelements (90) an der Anschlussvorrichtung dienen.

10. Anschlussvorrichtung nach einem der vorhergehenden Ansprüche, wobei die Unterkonstruktion (30) eine Trägerplatte (31) aufweist, an welcher die erste Gewindehülse (32) sowie, bevorzugt, die Sicherungsstange (34), angebracht sind.

11. Anschlussvorrichtung nach Anspruch 10, wobei die erste Gewindehülse (32) und die Trägerplatte (31) sowie bevorzugt die Sicherungsstange (34) nur mittels Zerstörung voneinander trennbar sind und bevorzugt miteinander verschweisst oder gemeinsam als Ganzes einstückig herstellt sind.

12. Anschlussvorrichtung nach Anspruch 9 oder 11, wobei an der Trägerplatte (31) eines oder mehrere Ankerelemente (21) angebracht oder anbringbar sind, welche zur Verankerung der Unterkonstruktion (30) an oder im Bauwerk dienen.
